# EUROPEAN PATENT SPECIFICATION

(11) **EP 4 000 912 B1**
(45) Date of publication and mention of the grant of the patent: **01.04.2026**
(21) Application number: 19954345.5
(22) Date of filing: 26.11.2019
(51) Int. Cl.: B29K 105/10, B32B 5/26, B29C 53/04, B29C 70/28, B32B 7/04, B29C 70/08, B29C 70/20, B29C 70/38, B29C 70/30, B32B 3/04, B32B 5/02, B32B 7/06

(54) **LAMINATION DEVICE AND FORMING METHOD**
LAMINIERVORRICHTUNG UND FORMVERFAHREN
DISPOSITIF DE LAMINER ET PROCÉDÉ DE FORMAGE

(43) Date of publication of application: 25.05.2022
(73) Proprietor: Mitsubishi Heavy Industries, Ltd., Chiyoda-ku, Tokyo 100-8332 (JP)
(72) Inventor: SHIMIZU, Masahiko, Tokyo 100-8332 (JP); MANO, Shoya, Tokyo 100-8332 (JP); KITAZAWA, Toshiki, Tokyo 100-8332 (JP); OZAKI, Ryota, Tokyo 100-8332 (JP); HORIZONO, Hideki, Tokyo 100-8332 (JP)
(74) Representative: Hoffmann Eitle
(86) International application number: PCT/JP2019/046155
(87) International publication number: WO 2021/106070

(56) References cited:
- JP-A- 2014 051 065
- JP-A- 2019 151 083
- JP-A- H0 747 596
- JP-A- H0 747 596
- JP-A- H07 108 529
- US-A1- 2019 275 749

## Description

### Technical Field

The present disclosure relates to a lamination device and a forming method.

### Background Art

In some aircraft parts such as a fuselage and a main wing of an aircraft, a composite material, for example, a carbon fiber reinforced plastic (CFRP) is used, and CFRP structural members configuring the aircraft parts have any cross-sectional shape. When a formed article is formed by forming the CFRP, a fiber sheet laminate (also called a charge) in which fiber sheets such as prepregs are laminated to be flat is formed by being bent so as to have an R-surface in the vicinity of a bending line or being curved so as to have a gentle curvature. In this way, a formed article having any cross-sectional shape is formed.

At this time, there is a concern that in a bending region of the fiber sheet laminate, a difference in peripheral length may occur between the inner surface side and the outer surface side of the fiber sheet laminate and wrinkles or the like may occur due to the difference in peripheral length. In order to prevent the occurrence of wrinkles, it is necessary to perform forming while causing the layers of the fiber sheet laminate, that is, the fiber sheets adjacent to each other to appropriately slide with respect to one another during the bending.

In US 2008/0210372 A1, it is described that the air trapped between the layers of the prepreg contributes to the occurrence of a slip or wrinkles of a layer during curing.

JP H07 47596 A discloses the feeding of a thermoplastic resin film into a partial intermediate layer of a cautious fiber reinforced thermoplastic resin composite material in order to improve the flextural properties of the material,

JP 2014 051065 A and US 2019/275749 A1 discloses a forming device and related forming method which represents the closest prior art.

### Summary of Invention

### Technical Problem

In the laminated fiber sheets, the fiber sheets (layers) adjacent to each other adhere to each other, so that an interlayer adhesive force acts. If the layers adjacent to each other are laminated with a strong interlayer adhesive force when the fiber sheets are laminated, the layers of the fiber sheet laminate do not appropriately slide with respect to one another during bending, so that there is a concern that a difference in peripheral length between the inner surface side and the outer surface side may not be absorbed. In that case, there is a possibility that wrinkles may occur during forming. On the other hand, if the layers adjacent to each other are laminated with a weak interlayer adhesive force when the fiber sheets are laminated, there is a possibility that peeling may occur in a laminating step or the fiber sheets may be peeled in pieces during handling (transportation or the like) after lamination.

The present invention has been made in view of such circumstances, and has an object to provide a lamination device and a forming method, in which it is possible to suppress the occurrence of wrinkles during bending and prevent peeling between layers.

### Solution to Problem

This object is solved by a lamination device with the features of claim 1 and a forming method with the features of claim 5. Preferred embodiments follow from the other claims.

The lamination device according to the present invention includes a supply unit that supplies and laminates fiber sheets, an adjustment unit that adjusts an interlayer adhesive force that is applied to the laminated fiber sheets, and a control unit that controls the adjustment unit such that the interlayer adhesive force of a non-bending region that is different from a bending region where bending is performed in the fiber sheets is stronger than the interlayer adhesive force of the bending region.

According to this configuration, the fiber sheet is supplied by the supply unit, and the interlayer adhesive force that is applied to the laminated fiber sheets is adjusted by the adjustment unit. Further, the control unit controls the adjustment unit, whereby the fiber sheets are laminated such that the interlayer adhesive force of the non-bending region that is different from the bending region where the bending is performed in the fiber sheets is stronger than the interlayer adhesive force of the bending region. In this way, the interlayer adhesive force in the bending region is relatively weak, so that the layers can be appropriately slid with respect to one another during the bending, and thus the occurrence of wrinkles can be suppressed. Further, in the non-bending region where the interlayer adhesive force is relatively strong, peeling during lamination or handling can be prevented.

In the lamination device according to the present disclosure, the adjustment unit includes a press adjustment unit (6) that adjusts a pressing force that is applied to the fiber sheet, and the control unit controls the pressing force that is adjusted by the press adjustment unit such that the pressing force that is applied to the fiber sheet is higher in the non-bending region than the pressing force in the bending region.

According to this configuration, the pressing force that is applied to the fiber sheet is adjusted such that in the non-bending region, the pressing force that is applied to the fiber sheet is higher than the pressing force in the bending region, and thus the interlayer adhesive force that is applied to the fiber sheets is adjusted. In this way, the interlayer adhesive force of the non-bending region is stronger than the interlayer adhesive force of the bending region.

In the lamination device according to one alternative of the present invention, the press adjustment unit is configured to adjust the pressing force when laminating the fiber sheets.

According to this configuration, the pressing force is changed, for example, for each layer or only at the time of the final lamination when laminating the fiber sheets, so that the interlayer adhesive force is changed.

In the lamination device according to the present invention, the press adjustment unit is configured to adjust the pressing force after lamination of the fiber sheets is completed.

According to this configuration, the pressing force is changed after the lamination of the fiber sheets is completed, so that the interlayer adhesive force is changed.

In the lamination device according to the present invention, the adjustment unit may include a heat adjustment unit that adjust a heating temperature that is applied to the fiber sheet, and the control unit may control the heating temperature that is adjusted by the heat adjustment unit such that the heating temperature that is applied to the fiber sheet is higher than the heating in the non-bending region temperature in the bending region.

According to this configuration, the heating temperature that is applied to the fiber sheet is adjusted such that in the non-bending region, the heating temperature that is applied to the fiber sheet is higher than the heating temperature in the bending region, and thus the interlayer adhesive force that is applied to the fiber sheets is adjusted. In this way, the interlayer adhesive force of the non-bending region is stronger than the interlayer adhesive force of the bending region.

In the lamination device according to the present invention, the heat adjustment unit may adjust the heating temperature when laminating the fiber sheets.

According to this configuration, the heating temperature is changed, for example, for each layer or only at the time of the final lamination when laminating the fiber sheets, so that the interlayer adhesive force is changed.

In the lamination device according to the present disclosure, the heat adjustment unit may adjust the heating temperature after lamination of the fiber sheets is completed.

According to this configuration, the heating temperature is changed after the lamination of the fiber sheets is completed, so that the interlayer adhesive force is changed.

The forming method according to the present invention includes a laminating step of supplying and laminating fiber sheets, and an adjusting step of adjusting an interlayer adhesive force that is applied to the laminated fiber sheets, in which in the adjusting step, the interlayer adhesive force is adjusted such that the interlayer adhesive force of a non-bending region that is different from a bending region where bending is performed in the fiber sheets is stronger than the interlayer adhesive force of the bending region.

According to this configuration, the fiber sheet is supplied and laminated, and the interlayer adhesive force that is applied to the laminated fiber sheets is adjusted. Further, the fiber sheets are laminated such that the interlayer adhesive force of the non-bending region that is different from the bending region where the bending is performed in the fiber sheets is stronger than the interlayer adhesive force of the bending region. In this way, the interlayer adhesive force in the bending region is relatively weak, so that the layers can be appropriately slid with respect to one another during the bending, and thus the occurrence of wrinkles can be suppressed. Further, in the region where the interlayer adhesive force is relatively strong, peeling during lamination or handling can be prevented.

In the forming method according to the present invention, the forming method may further include a second laminating step of supplying a sliding material having a property of being more easily slid than the fiber sheet to a predetermined position and laminating the sliding material, in which in the adjusting step, the fiber sheet or the sliding material to be laminated on an already disposed fiber sheet may be selected.

According to this configuration, the sliding material having a property of being more easily slid than the fiber sheet is supplied to a predetermined position and laminated. Further, the fiber sheet or the sliding material to be laminated on the already disposed fiber sheet is selected according to the bending region or the non-bending region, and thus the interlayer adhesive force that is applied to the fiber sheets is adjusted.

In the forming method according to the present invention, in the adjusting step, a material of the fiber sheet to be laminated on an already disposed fiber sheet may be changed.

According to this configuration, the material of the fiber sheet to be laminated on the already disposed fiber sheet is changed according to the bending region or the non-bending region, so that the interlayer adhesive force that is applied to the fiber sheets is adjusted.

In the forming method according to the present invention, in a case where a sticking direction of the fiber sheet is a direction parallel to a direction of a bending line at the time of bending, when the fiber sheets are laminated, the interlayer adhesive force may be adjusted such that the interlayer adhesive force of the non-bending region is a first interlayer adhesive force stronger than the interlayer adhesive force of the bending region.

In a case where the fiber sheets are stuck in the direction parallel to the direction of the bending line at the time of the bending, when the fiber sheets are laminated in the bending region, the interlayer adhesive force is set so as to be weaker. On the other hand, when the fiber sheets are laminated in the non-bending region, the interlayer adhesive force is set so as to be stronger.

In the forming method according to the present invention, in a case where the sticking direction of the fiber sheet is a direction orthogonal to or diagonal to a direction of a bending line at the time of bending, when the fiber sheets are laminated, the interlayer adhesive force may be adjusted such that the interlayer adhesive force of the non-bending region is stronger than the interlayer adhesive force of the bending region.

In a case where the fiber sheets are stuck in the direction orthogonal to or diagonal to the direction of the bending line at the time of the bending, the interlayer adhesive force may be changed when passing through the boundary (the vicinity of the bending line) between the bending region and the non-bending region. When the fiber sheets are laminated in the bending region, the interlayer adhesive force is weakened, and when the fiber sheets are laminated in the non-bending region, the interlayer adhesive force is strengthened.

### Advantageous Effects of Invention

According to the present disclosure, it is possible to suppress the occurrence of wrinkles during bending and prevent peeling between layers.

### Brief Description of Drawings

Fig. 1 is a schematic diagram showing a lamination device according to an embodiment of the present disclosure.
**Fig.** 2 is a perspective view showing a formed article that is formed by a forming method according to the embodiment of the present disclosure.
Fig. 3 is a perspective view showing a formed article that is formed by bending in the forming method according to the embodiment of the present disclosure.
Fig. 4 is a perspective view showing a fiber sheet, and shows a sticking direction and an interlayer adhesive force of a certain layer.
Fig. 5 is a perspective view showing a fiber sheet, and shows a sticking direction and an interlayer adhesive force of a certain layer.
Fig. 6 is a perspective view showing a fiber sheet, and shows a sticking direction and an interlayer adhesive force of a certain layer.
Fig. 7 is a perspective view showing a formed article that is formed by a first modification example of the forming method according to the embodiment of the present disclosure.
Fig. 8 is a perspective view showing a formed article that is formed by bending in the first modification example of the forming method according to the embodiment of the present disclosure.
Fig. 9 is a perspective view showing a formed article that is formed by a second modification example of the forming method according to the embodiment of the present disclosure.
Fig. 10 is a transverse sectional view taken along line A-A of Fig. **9****.**
Fig. 11 is a perspective view showing an example of the forming method according to the embodiment of the present disclosure.
Fig. 12 is a flowchart showing the forming method according to the embodiment of the present disclosure. Description of Embodiments

Hereinafter, an embodiment according to the present disclosure will be described with reference to the drawings.

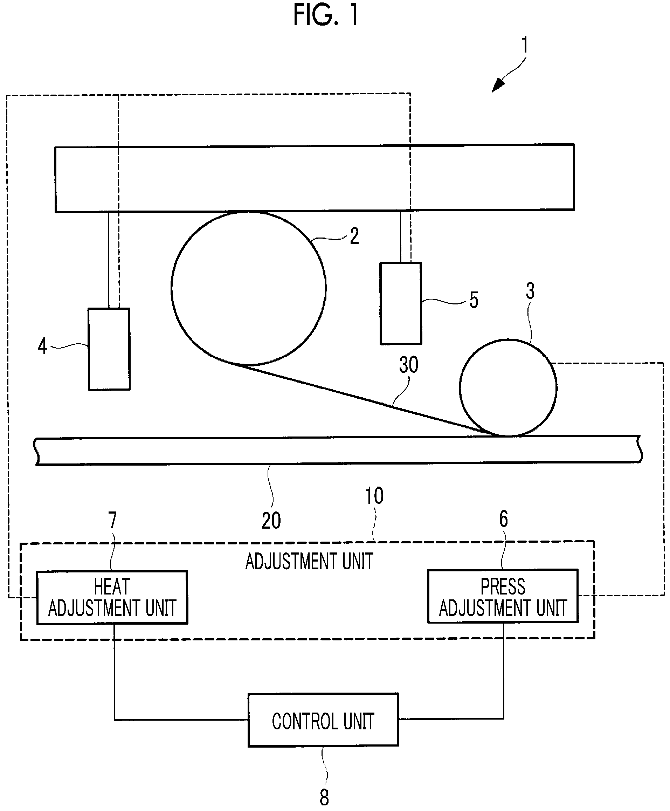

As shown in Fig. 1, a lamination device 1 that is used for a forming method according to the present embodiment includes a supply unit 2, a pressing unit 3, heating units 4 and 5, an adjustment unit 10, a control unit 8, and the like. In the lamination device 1, a fiber sheet 30 such as a prepreg is supplied one layer at a time toward a forming surface 20 to be placed on the forming surface 20, and then the placed fiber sheet 30 is pressed by using the pressing unit **3.** Next, another fiber sheet 30 is supplied and placed on the upper surface of the laminated fiber sheet 30, and is pressed by using the pressing unit 3. This operation is repeated layer by layer, so that a plurality of fiber sheets 30 are laminated on the forming surface 20 to form a fiber sheet laminate having a target shape, for example, a flat fiber sheet laminate. The lamination device 1 is an example of the forming device according to the present disclosure.

The fiber sheet 30 has a tape shape that is long in one direction, is wound in a roll shape before being supplied, and is accommodated in the supply unit 2. The direction of each fiber in the fiber sheet 30 is disposed so as to be parallel to a longitudinal direction of the fiber sheet 30. The fiber sheet 30 wound in a roll shape is supplied from the supply unit **2.**

The supply unit 2 discharges the fiber sheet 30 in one direction and supplies the fiber sheet 30 to the forming surface 20. The supply unit 2 is configured to be movable along the longitudinal direction and the lateral direction of the forming surface 20. In this case, the supply unit 2 supplies the fiber sheet 30 from one end side to the other end side in the longitudinal direction of the forming surface 20 or from one end side to the other end side in the lateral direction while moving.

The pressing unit 3 is, for example, a roller, and presses the fiber sheet 30 placed on the forming surface 20. The pressing unit 3 is driven so as to apply a predetermined pressing force (compacting force) to the forming surface 20 or the fiber sheet 30. Further, the pressing unit 3 is movable along the longitudinal direction and the lateral direction of the forming surface 20, and the pressing unit 3 presses the fiber sheet 30 while moving, so that the long fiber sheet 30 can be deformed over the range from one end to the other end.

The adjustment unit 10 adjusts an interlayer adhesive force that is applied to the laminated fiber sheets 30. The adjustment unit 10 includes, for example, a press adjustment unit 6 and a heat adjustment unit 7.

The press adjustment unit 6 adjusts a pressing force that is applied to the fiber sheet 30 by the pressing unit **3.** The press adjustment unit 6 drives the pressing unit 3, based on a signal received from the control unit 8, to increase or decrease the pressing force.

The heating units 4 and 5 heat the fiber sheet 30 or the forming surface 20. The heating units 4 and 5 heat an object by, for example, infrared rays, warm air, laser light, or the like.

The heating unit 4 is installed in front of the supply unit 2 in a moving direction and heats the forming surface 20, the fiber sheet 30 before being placed on the forming surface 20, or the fiber sheet 30 that has already been formed on the forming surface 20. The heating unit 5 is installed behind the supply unit 2 in the moving direction and heats the fiber sheet 30 before being placed on the forming surface 20. In this way, the fiber sheet 30 or the forming surface 20 is heated before the fiber sheet 30 is placed on the forming surface 20 or before the fiber sheet 30 is deformed by using the pressing unit **3.** In this way, the plasticity of the fiber sheet 30 is increased. Since the adherence of the fiber sheets 30 is improved due to a temperature rise, the adhesive property between the fiber sheets 30 is enhanced.

Further, a heating unit (not shown) may heat the pressing unit 3 from the outside. Alternatively, a heating unit (not shown) may be provided inside the pressing unit 3 to generate heat in the pressing unit **3.** In this way, when the fiber sheet 30 is pressed by using the pressing unit 3, the pressing unit 3 is heated or the pressing unit 3 generates heat, so that the plasticity of the fiber sheet 30 is increased, and since the adherence of the fiber sheets 30 is improved due to a temperature rise, the adhesive property between the fiber sheets 30 is enhanced.

The heat adjustment unit 7 adjusts a heating temperature that is applied to the fiber sheet 30. The heat adjustment unit 7 raises or lowers the heating temperature by the heating units 4 and 5 or the like, based on a signal received from the control unit 8.

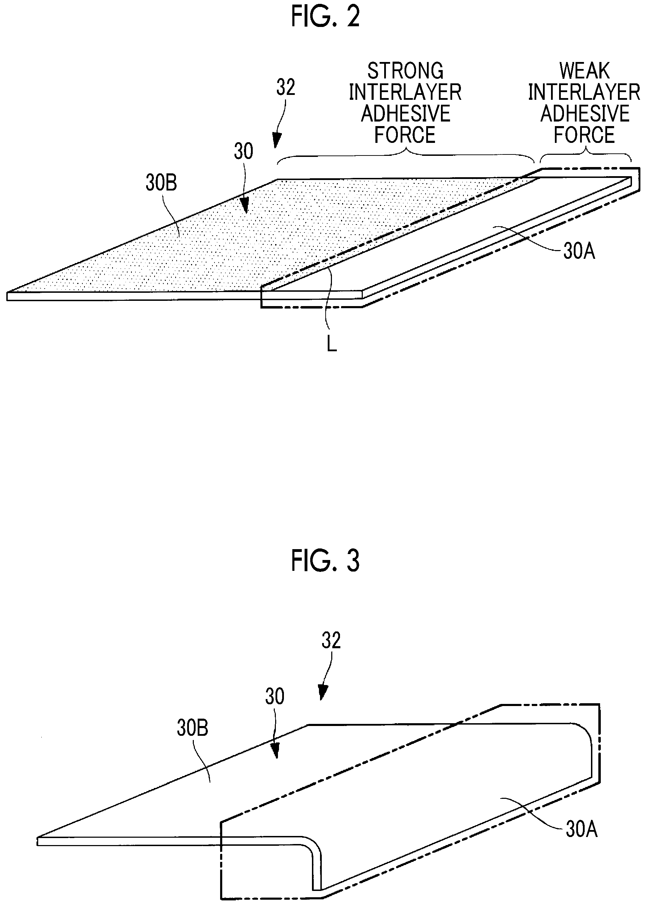

The control unit 8 controls the press adjustment unit 6 or the heat adjustment unit 7 such that an interlayer adhesive force of a non-bending region 30B is stronger than an interlayer adhesive force of a bending region 30A, as shown in Fig. 2. Here, the interlayer adhesive force refers to an adhesive force acting between the fiber sheets 30 when the fiber sheets 30 adjacent to each other adhere to each other in the laminated fiber sheets 30. The bending region 30A is a region where an interlayer slip occurs during bending. The non-bending region 30B is a region other than the bending region 30A, and is, for example, a region adjacent to the bending region 30A. The control unit 8 determines the position where the fiber sheets 30 are laminated, and increases the interlayer adhesive force in the non-bending region 30B, and decreases the interlayer adhesive force in the bending region 30A. It is desirable that the interlayer adhesive force of the bending region 30A is 90% or less of the interlayer adhesive force of the non-bending region 30B.

A bending device (not shown) performs bending on a fiber sheet laminate 32, in which a plurality of fiber sheets 30 are laminated, so as to obtain a formed article having a final shape. In the bending of the present embodiment, the fiber sheet laminate 32 is bent along a bending line L to cause an interlayer slip to occur in the bending region 30A. Fig. 3 shows an example of a formed article formed by bending the fiber sheet laminate 32 shown in Fig. 2 along the bending line L. The bending device includes, for example, a forming tool having a shape corresponding to the final shape, a roller for pressing the fiber sheet laminate 32, a heating unit that heats the fiber sheet laminate 32, and the like.

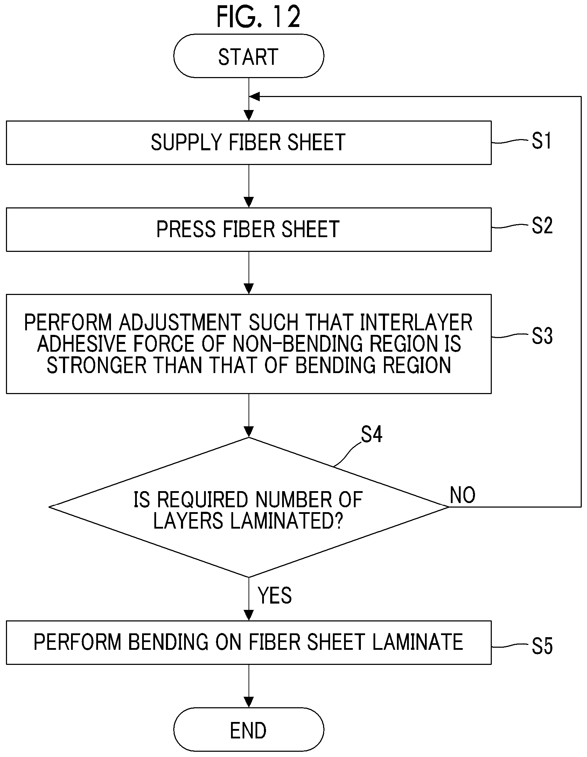

Next, the forming method for the fiber sheet 30 according to the present embodiment will be described with reference to Fig. 12.

First, the supply unit 2 discharges the fiber sheet 30 and supplies the fiber sheet 30 to the forming surface 20 (step S1). The supply unit 2 supplies the fiber sheet 30 while moving from one end side to the other end side of the forming surface 20 in a predetermined direction. The fiber sheet 30 supplied from the supply unit 2 is placed on the forming surface 20. Further, the pressing unit 3 presses the fiber sheet 30 while moving from one end side to the other end side of the forming surface 20 together with the supply unit 2 (step S2).

When the fiber sheet 30 is repeatedly supplied and pressed from one end side to the other end side over the entire predetermined region on the forming surface 20, the forming of the fiber sheet 30 of a first layer is completed. At this time, as shown in Fig. 2, there is a case where the interlayer adhesive force of the non-bending region 30B other than the bending region (forming area) 30A where bending is performed is adjusted so as to be stronger than the interlayer adhesive force of the bending region 30A (step S3).

Next, the supply unit 2 and the pressing unit 3 supply and press the fiber sheet 30 on the already placed fiber sheet 30 while moving from one end side to the other end side of the forming surface 20 in the direction different from or the same direction as that in the first layer. When the fiber sheet 30 is repeatedly supplied and pressed from one end side to the other end side over the entire predetermined region on the fiber sheet 30 of the first layer, forming of the fiber sheet 30 of a second layer is completed.

When the operation described above is repeated and the required number of fiber sheets 30 are laminated and formed (step S4), for example, a flat fiber sheet laminate 32 is formed, and the lamination and forming of the fiber sheet 30 are completed. Next, bending is performed on the fiber sheet laminate 32, in which the plurality of fiber sheets 30 are laminated, by a bending device so as to obtain a formed article having a final shape (step S5).

In the present embodiment, in the step of laminating the fiber sheets 30 described above, the interlayer adhesive force of the non-bending region 30B other than the bending region (forming area) 30A where bending is performed is adjusted so as to be stronger than the interlayer adhesive force of the bending region 30A, as shown in Fig. **2****.** That is, in the bending region 30A, the interlayer adhesive force is weakened, and in the non-bending region 30B, the interlayer adhesive force is strengthened.

In this way, during the bending, an interlayer slip is easily generated appropriately in the bending region 30A, so that the forming property is improved. As a result, the occurrence of wrinkles can be suppressed in the fiber sheet 30. Further, in the non-bending region 30B where the interlayer adhesive force is relatively strong, peeling of the fiber sheet 30 that occurs at the time of lamination can be prevented, so that the laminating property is improved. Further, in the non-bending region 30B where the interlayer adhesive force is relatively strong, interlayer peeling at the time of handling can be prevented, so that the handling property is improved.

In accordance with the invention, where the pressing force by the pressing unit 3 is adjusted to control the interlayer adhesive force, in the bending region 30A, the pressing force is decreased to weaken the interlayer adhesive force, and in the non-bending region 30B, the pressing force is increased to strengthen the interlayer adhesive force. In a case where the interlayer adhesive force is additionally controlled by adjusting the heating temperature by the heating units 4 and 5 or the like, in the bending region 30A, the heating temperature is lowered to weaken the interlayer adhesive force, and in the non-bending region 30B, the heating temperature is increased to strengthen the interlayer adhesive force.

The interlayer adhesive force is adjusted by changing the pressing force and, optionally, the heating temperature for each layer at the time of lamination according to the bending region 30A or the non-bending region 30B. The present disclosure is not limited to this example, and the interlayer adhesive force may be changed by changing the pressing force and, optionally, the heating temperature only at the time of the final lamination, or the interlayer adhesive force may be changed by applying the pressing force or giving heating separately from the laminating step after the lamination is completed.

Next, the relationship between a sticking direction of a tow or a tape of the fiber sheet 30 and the direction of the bending line L at the time of the bending will be described.

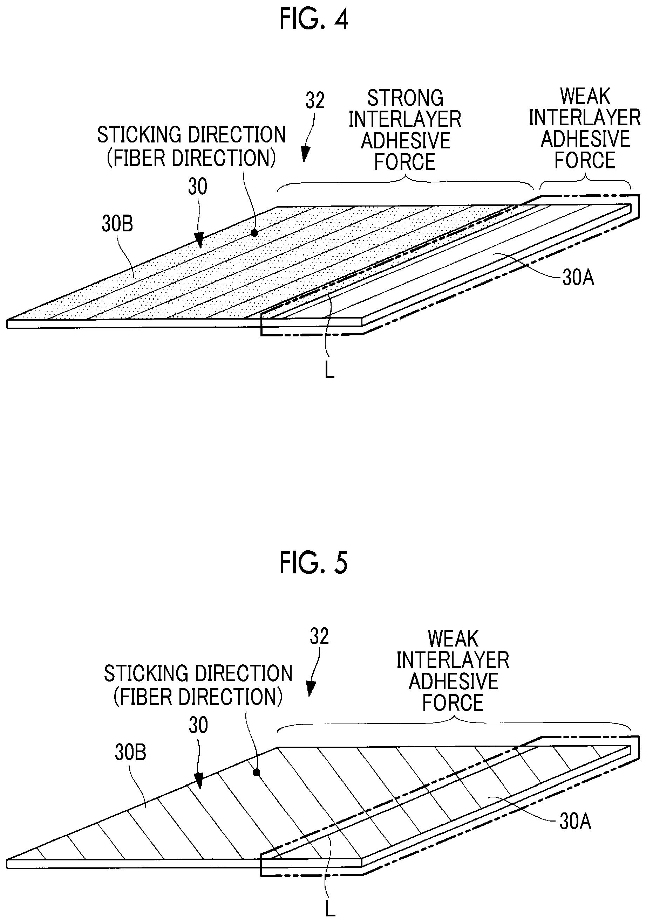

As shown in Fig. 4, in a case where the sticking direction (fiber direction) of the tow or the tape of the fiber sheet 30 is parallel to the direction of the bending line L at the time of the bending, when the fiber sheets 30 are laminated in the bending region 30A, the pressing force or the heating temperature is set such that the interlayer adhesive force is weakened. On the other hand, when the fiber sheets 30 are laminated in the non-bending region 30B, the pressing force or the heating temperature is set such that the interlayer adhesive force of the non-bending region 30B is a first interlayer adhesive force stronger than the interlayer adhesive force of the bending region 30A.

As shown in Fig. 5, in a case where the sticking direction of the tow or the tape of the fiber sheet 30 is orthogonal to or diagonal to the direction of the bending line L at the time of the bending, the pressing force or the heating temperature is set such that the interlayer adhesive force is a second interlayer adhesive force weaker than the first interlayer adhesive force. In this case, when the fiber sheets 30 are stuck over the range from one side to the other side, it is not necessary to change the interlayer adhesive force during the lamination. Therefore, the lamination of the fiber sheets 30 can be efficiently performed without reducing a lamination speed.

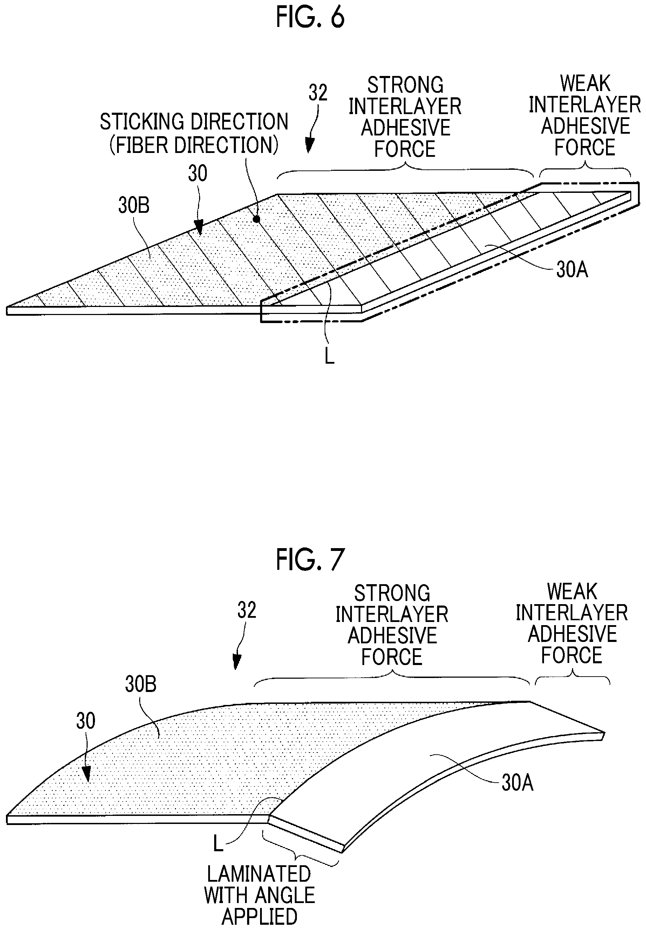

The present disclosure is not limited to this example, and as shown in Fig. 6, in a case where the sticking direction of the tow or the tape of the fiber sheet 30 is orthogonal to or diagonal to the direction of the bending line L at the time of the bending, the interlayer adhesive force may be changed when passing through the boundary (the vicinity of the bending line L) between the bending region 30A and the non-bending region 30B. When the fiber sheets 30 are laminated in the bending region 30A, the interlayer adhesive force is weakened, and when the fiber sheets 30 are laminated in the non-bending region 30B, the interlayer adhesive force is strengthened. In this case, when the fiber sheets 30 are stuck over the range from one side to the other side, the interlayer adhesive force is changed during the lamination. Unlike a case where the interlayer adhesive force is weakened over the entire surface, the interlayer adhesive force in the non-bending region 30B is stronger.

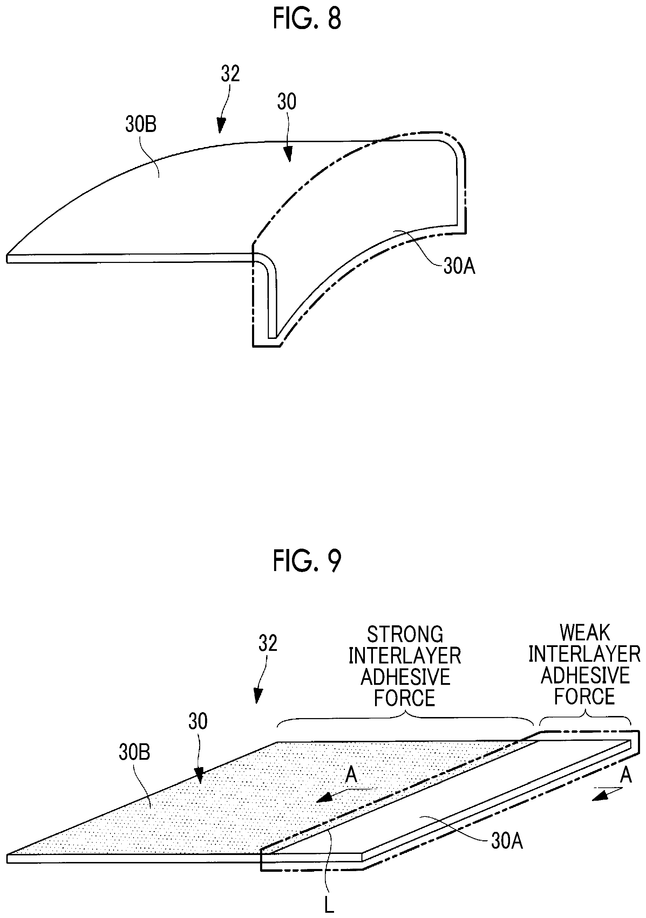

In the embodiment described above, a case where the fiber sheets 30 are laminated to be flat has been described. However, as shown in Fig. 7, the fiber sheets 30 may be laminated so as to have a bending angle of less than 180 degrees in the vicinity of the bending line L. A forming tool that is used in this case has a shape in which the bending angle is larger than the bending angle of the cross-sectional shape of the formed article to be formed (refer to Fig. 8) and is less than 180 degrees. For example, in a case where a long member having an L-shaped cross section or a C-shaped cross section bent at 90 degrees is formed as a formed article, the bending angle of the forming tool has an angle larger than 90 degrees.

Then, with respect to the fiber sheet laminate 32 that is laminated on the forming tool and formed into a shape corresponding to the forming tool, that is, the formed article having a bending angle larger than 90 degrees as shown in Fig. 7, the bending is performed so as to obtain a formed article having the final shape shown in Fig. 8. In this way, the bending angle that is applied at the time of the bending is reduced as compared with a case where the bending is performed on the flat fiber sheet laminate 32 so as to obtain a formed article, and the amount of interlayer slip that is generated in the bending region 30A is reduced.

Further, in the embodiment described above, a case where the pressing force and, optionally, the heating temperature is changed in order to adjust the interlayer adhesive force has been described. However, the present disclosure is not limited to this example.

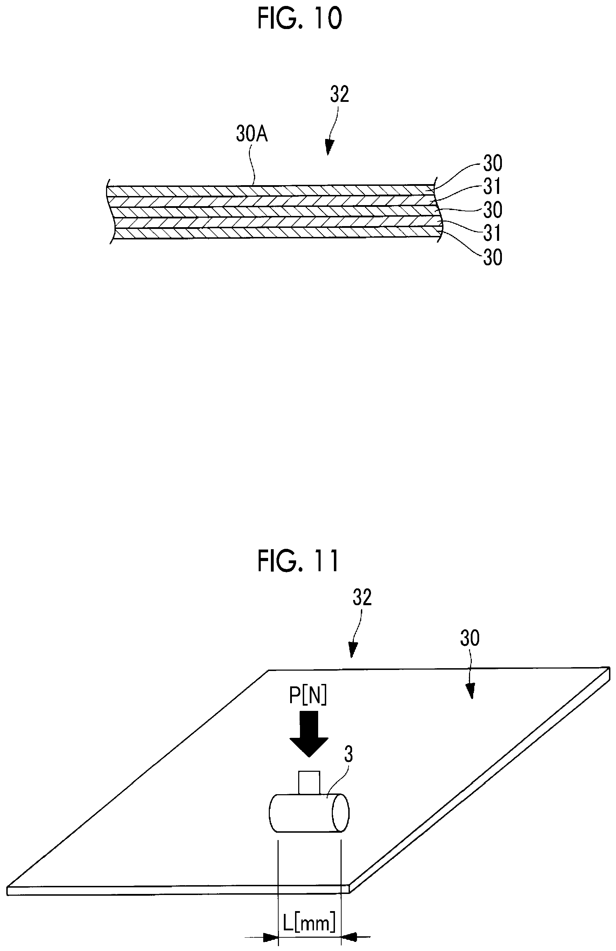

For example, as shown in Figs. 9 and 10, a sliding material 31 having a property of being more easily slid than the fiber sheet 30 may be interposed between the fiber sheets 30 in the bending region 30A. The sliding material 31 is, for example, a material made of fluorine-based resin. Fig. 10 is a transverse sectional view taken along line A-A of Fig. 9. In this case, the fiber sheet 30 or the sliding material 31 to be laminated on the already disposed fiber sheet 30 is selected according to the bending region 30A or the non-bending region 30B, so that the interlayer adhesive force that is applied to the fiber sheet 30 is adjusted. For example, in the non-bending region 30B, only the fiber sheets 30 are laminated, and in the bending region 30A, the fiber sheet 30 and the sliding material 31 are alternately laminated.

Further, the fiber sheet 30 having a property of being more easily slid than the fiber sheet 30 that is laminated in the non-bending region 30B may be laminated in the bending region 30A. In this case, the material of the fiber sheet 30 to be laminated on the already disposed fiber sheet 30 is changed according to the bending region 30A or the non-bending region 30B, so that the interlayer adhesive force that is applied to the fiber sheet 30 is adjusted. For example, in the non-bending region 30B, the fiber sheets 30 having a relatively high adherence are laminated, and in the bending region 30A, the fiber sheets 30 having a relatively low adherence are laminated.

As described above, according to the present embodiment, the fiber sheet 30 is supplied to a predetermined position by the supply unit 2, and the interlayer adhesive force that is applied to the fiber sheet 30 to be laminated on the already disposed fiber sheet 30 is adjusted by the press adjustment unit 6 or the heat adjustment unit 7. Further, the control unit 8 controls the press adjustment unit 6 or the heat adjustment unit 7, whereby the fiber sheets 30 are laminated such that the interlayer adhesive force of the non-bending region 30B is stronger than the interlayer adhesive force of the bending region 30A. In this way, the interlayer adhesive force in the bending region 30A is relatively weak, so that the layers can be appropriately slid with respect to one another during the bending, and thus the occurrence of wrinkles can be suppressed. Further, in the non-bending region 30B having a relatively strong interlayer adhesive force, peeling during lamination or handling can be prevented.

The inventors confirmed the presence or absence of the occurrence of wrinkles according to the magnitude of the pressing force by using a compaction roller as the pressing unit 3 and changing the pressing force (compacting force) that is applied to the pressing unit 3, as shown in Fig. 11. The pressing force is represented by P/L [N/mm]. Here, P [N] is the force input to the compaction roller, and L [mm] is the length of the portion where the compaction roller comes into contact with the fiber sheet 30. As a result, wrinkles occurred in a case where the pressing force was 3.29 N/mm, and no wrinkles occurred in a case where the pressing force was 1.05 N/mm. From the above, it is confirmed that in a case where the pressing force is low and the interlayer adhesive force is relatively weak, an interlayer slip occurs appropriately, so that wrinkles do not occur.

### Reference Signs List

1: lamination device
2: supply unit
3: pressing unit
4, 5: heating unit
6: press adjustment unit
7: heat adjustment unit
8: control unit
10: adjustment unit
20: forming surface
30: fiber sheet
30A: bending region
30B: non-bending region
31: sliding material
32: fiber sheet laminate
L: bending line

## Claims

1. A lamination device (1) comprising:
a supply unit (2) that is configured to supply and laminate fiber sheets (30);
a pressing unit (3) that is configured to press the fiber sheet (30); an adjustment unit (10) that is configured to adjust an interlayer adhesive force that is applied to the laminated fiber sheets; and
a control unit (8) that is configured to control the adjustment unit such that the interlayer adhesive force of a non-bending region (30B) that is different from a bending region (30A) where bending is performed in the fiber sheets is stronger than the interlayer adhesive force of the bending region (30A),
**characterized in that**
the adjustment unit (10) includes a press adjustment unit (6) that is configured to drive the pressing unit (3) and to adjust a pressing force that is applied to the fiber sheet (30) by the pressing unit (3),
the control unit (8) is configured to control the pressing force that is adjusted by the press adjustment unit (6) such that the pressing force that is applied to the fiber sheet is higher in the non-bending region (30B) than the pressing force in the bending region (30A), and
the press adjustment unit (6) is configured to adjust the pressing force when laminating the fiber sheets (30) or after completion of laminating the fiber sheets (30).

2. The lamination device according to claim 1, wherein the adjustment unit (10) includes a heat adjustment unit (7) that is configured to adjust a heating temperature that is applied to the fiber sheet, and
the control unit (8) is configured to control the heating temperature that is adjusted by the heat adjustment unit (7) such that the heating temperature that is applied to the fiber sheet is higher in the non-bending region (30B) than the heating temperature in the bending region (30A).

3. The lamination device according to claim 2, wherein the heat adjustment unit (7) is configured to adjust the heating temperature when laminating the fiber sheets (30).

4. The lamination device according to claim 2, wherein the heat adjustment unit (7) is configured to adjust the heating temperature after lamination of the fiber sheets (30) is completed.

5. A forming method comprising:
a supply step of supplying and laminating fiber sheets (30); and
an adjusting step of adjusting an interlayer adhesive force that is applied to the laminated fiber sheets (30),
wherein in the adjusting step, the interlayer adhesive force is adjusted such that the interlayer adhesive force of a non-bending region (30B) that is different from a bending region where bending is performed in the fiber sheets is stronger than the interlayer adhesive force of the bending region (30A),
**characterized in that**
an adjustment unit (10), included in a lamination device (1), includes a press adjustment unit (6) that adjusts a pressing force that is applied to the fiber sheet by driving the pressing unit (3),
a control unit (8) controls the pressing force that is adjusted by the press adjustment unit (6) such that the pressing force that is applied to the fiber sheet is higher in the non-bending region (30B) than the pressing force in the bending region (30A), and
the press adjustment unit (6) adjusts the pressing force when laminating the fiber sheets (30) or after completion of laminating the fiber sheets (30).

6. The forming method according to claim **5,**
further including:
a step of supplying a sliding material (31) having a property of being more easily slid than the fiber sheet (30) to a predetermined position and laminating the sliding material (31), and
wherein in the adjusting step, the fiber sheet (30) or the sliding material (31) to be laminated on an already disposed fiber sheet is selected.

7. The forming method according to claim 5 or **6,** wherein in the adjusting step, a material of the fiber sheet to be laminated on an already disposed fiber sheet is changed.

8. The forming method according to any one of claims 5 to **7,** wherein in a case where a sticking direction of the fiber sheet is parallel to a direction of a bending line at the time of the bending, when the fiber sheets are laminated, the interlayer adhesive force is adjusted such that the interlayer adhesive force of the non-bending region (30B) is a first interlayer adhesive force stronger than the interlayer adhesive force of the bending region (30A).

9. The forming method according to any one of claims 5 to 8, wherein in a case where a sticking direction of the fiber sheet is a direction orthogonal to or diagonal to a direction of a bending line at the time of the bending, when the fiber sheets are laminated, the interlayer adhesive force is adjusted such that the interlayer adhesive force of the non-bending region (30B) is stronger than the interlayer adhesive force of the bending region (30A).

## Patentansprüche

1. Laminiervorrichtung (1), umfassend:
eine Zuführungseinheit (2), die konfiguriert ist, um Faserfolien (30) zuzuführen und zu laminieren;
eine Presseinheit (3), die konfiguriert ist, um die Faserfolie (30) zu pressen; eine Anpassungseinheit (10), die konfiguriert ist, um eine Zwischenschicht-Klebekraft anzupassen, die auf die laminierten Faserfolien angewendet wird; und
eine Steuereinheit (8), die konfiguriert ist, um die Anpassungseinheit so zu steuern, dass die Zwischenschicht-Klebekraft eines Nicht-Biegebereichs (30B), der sich von einem Biegebereich (30A) unterscheidet, in dem ein Biegen in den Faserfolien durchgeführt wird, stärker ist als die Zwischenschicht-Klebekraft des Biegebereichs (30A),
**dadurch gekennzeichnet, dass**
die Anpassungseinheit (10) eine Pressanpassungseinheit (6) einschließt, die konfiguriert ist, um die Presseinheit (3) anzutreiben und eine Presskraft anzupassen, die durch die Presseinheit (3) auf die Faserfolie (30) angewendet wird,
die Steuereinheit (8) konfiguriert ist, um die Presskraft, die durch die Pressanpassungseinheit (6) angepasst wird, so zu steuern, dass die Presskraft, die auf die Faserfolie angewendet wird, in dem Nicht-Biegebereich (30B) höher ist als die Presskraft in dem Biegebereich (30A), und
die Pressanpassungseinheit (6) konfiguriert ist, um die Presskraft anzupassen, wenn die Faserfolien (30) laminiert werden oder nach Abschluss des Laminierens der Faserfolien (30).

2. Laminiervorrichtung nach Anspruch 1, wobei die Anpassungseinheit (10) eine Wärmeanpassungseinheit (7) einschließt, die konfiguriert ist, um eine Heiztemperatur anzupassen, die auf die Faserfolie angewendet wird, und
die Steuereinheit (8) konfiguriert ist, um die Heiztemperatur, die durch die Wärmeanpassungseinheit (7) angepasst wird, so zu steuern, dass die Heiztemperatur, die auf die Faserfolie angewendet wird, in dem Nicht-Biegebereich (30B) höher ist als die Heiztemperatur in dem Biegebereich (30A).

3. Laminiervorrichtung nach Anspruch 2, wobei die Wärmeanpassungseinheit (7) konfiguriert ist, um die Heiztemperatur anzupassen, wenn die Faserfolien (30) laminiert werden.

4. Laminiervorrichtung nach Anspruch 2, wobei die Wärmeanpassungseinheit (7) konfiguriert ist, um die Heiztemperatur anzupassen, nachdem die Laminierung der Faserfolien (30) abgeschlossen ist.

5. Ausbildungsverfahren, umfassend:
einen Zuführungsschritt des Zuführens und Laminierens von Faserfolien (30); und
einen Anpassungsschritt des Anpassens einer Zwischenschicht-Klebekraft, die auf die laminierten Faserfolien (30) angewendet wird,
wobei in dem Anpassungsschritt die Zwischenschicht-Klebekraft so angepasst wird, dass die Zwischenschicht-Klebekraft eines Nicht-Biegebereichs (30B), der sich von einem Biegebereich unterscheidet, in dem ein Biegen in den Faserfolien durchgeführt wird, stärker ist als die Zwischenschicht-Klebekraft des Biegebereichs (30A),
**dadurch gekennzeichnet, dass**
eine Anpassungseinheit (10), die in einer Laminiervorrichtung (1) eingeschlossen ist, eine Pressanpassungseinheit (6) einschließt, die eine Presskraft anpasst, die durch das Antreiben der Presseinheit (3) auf die Faserfolie angewendet wird,
eine Steuereinheit (8) die von der Pressanpassungseinheit (6) angepasste Presskraft so steuert, dass die auf die Faserfolie angewandte Presskraft in dem Nicht-Biegebereich (30B) höher ist als die Presskraft in dem Biegebereich (30A), und
die Pressanpassungseinheit (6) die Presskraft anpasst, wenn die Faserfolien (30) laminiert werden oder nach Abschluss des Laminierens der Faserfolien (30).

6. Ausbildungsverfahren nach Anspruch 5,
weiter einschließend:
einen Schritt des Zuführens eines Gleitmaterials (31), das eine Eigenschaft aufweist, sich leichter schieben zu lassen als die Faserfolie (30), zu einer vorbestimmten Position und des Laminierens des Gleitmaterials (31), und
wobei in dem Anpassungsschritt die Faserfolie (30) oder das Gleitmaterial (31), das auf eine bereits angeordnete Faserfolie zu laminieren ist, ausgewählt wird.

7. Ausbildungsverfahren nach Anspruch 5 oder 6, wobei in dem Anpassungsschritt ein Material der auf eine bereits angeordnete Faserfolie zu laminierenden Faserfolie geändert wird.

8. Ausbildungsverfahren nach einem der Ansprüche 5 bis 7, wobei in einem Fall, in dem eine Kleberichtung der Faserfolie parallel zu einer Richtung einer Biegelinie zum Zeitpunkt des Biegens ist, wenn die Faserfolien laminiert werden, die Zwischenschicht-Klebekraft so angepasst wird, dass die Zwischenschicht-Klebekraft des Nicht-Biegebereichs (30B) eine erste Zwischenschicht-Klebekraft ist, die stärker ist als die Zwischenschicht-Klebekraft des Biegebereichs (30A).

9. Ausbildungsverfahren nach einem der Ansprüche 5 bis 8, wobei in einem Fall, in dem eine Kleberichtung der Faserfolie eine Richtung orthogonal zu oder diagonal zu einer Richtung einer Biegelinie zum Zeitpunkt des Biegens ist, wenn die Faserfolien laminiert werden, die Zwischenschicht-Klebekraft so angepasst wird, dass die Zwischenschicht-Klebekraft des Nicht-Biegebereichs (30B) stärker ist als die Zwischenschicht-Klebekraft des Biegebereichs (30A).

## Revendications

1. Dispositif de stratification (1) comprenant :
une unité d'alimentation (2) qui est configurée pour fournir et stratifier des feuilles de fibres (30) ;
une unité de pressage (3) qui est configurée pour presser la feuille de fibres (30) ; une unité d'ajustement (10) qui est configurée pour ajuster une force d'adhérence intercouche qui est appliquée aux feuilles de fibres stratifiées ; et
une unité de commande (8) qui est configurée pour commander l'unité d'ajustement de sorte que la force d'adhérence intercouche d'une région de non-flexion (30B) qui est différente d'une région de flexion (30A) où la flexion est réalisée dans les feuilles de fibres est plus forte que la force d'adhérence intercouche de la région de flexion (30A),
**caractérisé en ce que**
l'unité d'ajustement (10) inclut une unité (6) d'ajustement de presse qui est configurée pour entraîner l'unité de pressage (3) et pour ajuster une force de pressage qui est appliquée à la feuille de fibres (30) par l'unité de pressage (3),
l'unité de commande (8) est configurée pour commander la force de pressage qui est ajustée par l'unité (6) d'ajustement de presse de sorte que la force de pressage qui est appliquée à la feuille de fibres soit supérieure dans la région de non-flexion (30B) à la force de pressage dans la région de flexion (30A), et
l'unité (6) d'ajustement de presse est configurée pour ajuster la force de pressage lors de la stratification des feuilles de fibres (30) ou après la fin de la stratification des feuilles de fibres (30).

2. Dispositif de stratification selon la revendication 1, dans lequel l'unité d'ajustement (10) inclut une unité d'ajustement de chaleur (7) qui est configurée pour ajuster une température de chauffage qui est appliquée à la feuille de fibres, et
l'unité de commande (8) est configurée pour commander la température de chauffage qui est ajustée par l'unité d'ajustement de chaleur (7) de sorte que la température de chauffage qui est appliquée à la feuille de fibres soit supérieure dans la région de non-flexion (30B) à la température de chauffage dans la région de flexion (30A).

3. Dispositif de stratification selon la revendication 2, dans lequel l'unité d'ajustement de chaleur (7) est configurée pour ajuster la température de chauffage lors de la stratification des feuilles de fibres (30).

4. Dispositif de stratification selon la revendication 2, dans lequel l'unité d'ajustement de chaleur (7) est configurée pour ajuster la température de chauffage après que la stratification des feuilles de fibres (30) est terminée.

5. Procédé de formation comprenant :
une étape d'alimentation consistant à fournir et à stratifier des feuilles de fibres (30) ; et
une étape d'ajustement consistant à ajuster une force d'adhérence intercouche qui est appliquée aux feuilles de fibres (30) stratifiées,
dans lequel lors de l'étape d'ajustement, la force d'adhérence intercouche est ajustée de sorte que la force d'adhérence intercouche d'une région de non-flexion (30B) qui est différente d'une région de flexion où la flexion est réalisée dans les feuilles de fibres soit supérieure à la force d'adhérence intercouche de la région de flexion (30A),
**caractérisé en ce que**
une unité d'ajustement (10), incluse dans un dispositif de stratification (1), inclut une unité (6) d'ajustement de presse qui ajuste une force de pressage qui est appliquée à la feuille de fibres en entraînant l'unité de pressage (3),
une unité de commande (8) commande la force de pressage qui est ajustée par l'unité (6) d'ajustement de presse de sorte que la force de pressage qui est appliquée à la feuille de fibres est supérieure dans la région de non-flexion (30B) à la force de pressage dans la région de flexion (30A), et
l'unité (6) d'ajustement de presse ajuste la force de pressage lors de la stratification des feuilles de fibres (30) ou après la fin de la stratification des feuilles de fibres (30).

6. Procédé de formation selon la revendication 5,
incluant en outre :
une étape de fourniture d'un matériau glissant (31) présentant la propriété d'être plus facilement glissé que la feuille de fibres (30) vers une position prédéterminée et de stratification du matériau glissant (31), et
dans lequel dans l'étape d'ajustement, la feuille de fibres (30) ou le matériau glissant (31) à stratifier sur une feuille de fibres déjà disposée est sélectionné(e).

7. Procédé de formation selon la revendication 5 ou la revendication 6, dans lequel dans l'étape d'ajustement, un matériau de la feuille de fibres à stratifier sur une feuille de fibres déjà disposée est modifié.

8. Procédé de formation selon l'une quelconque des revendications 5 à 7, dans lequel dans un cas où une direction d'adhésion de la feuille de fibres est parallèle à une direction d'une ligne de flexion au moment de la flexion, lorsque les feuilles de fibres sont stratifiées, la force d'adhérence intercouche est ajustée de sorte que la force d'adhérence intercouche de la région de non-flexion (30B) soit une première force d'adhérence intercouche plus forte que la force d'adhérence intercouche de la région de flexion (30A).

9. Procédé de formation selon l'une quelconque des revendications 5 à 8, dans lequel dans un cas où une direction d'adhésion de la feuille de fibres est une direction orthogonale à ou diagonale à une direction d'une ligne de flexion au moment de la flexion, lorsque les feuilles de fibres sont stratifiées, la force d'adhérence intercouche est ajustée de sorte que la force d'adhérence intercouche de la région de non-flexion (30B) soit plus forte que la force d'adhérence intercouche de la région de flexion (30A).
